Europäisches Patentamt

European Patent Office

Office européen des brevets

(19)

(11) Publication number: **0 053 597**
**B1**

(12) **EUROPEAN PATENT SPECIFICATION**

(45) Date of publication of patent specification: **14.08.85**  (51) Int. Cl.⁴: **G 01 F 23/28, G 21 C 17/02**

(21) Application number: **81850230.4**

(22) Date of filing: **27.11.81**

(54) A cooling medium detector in a nuclear reactor.

(30) Priority: **27.11.80 SE 8008340**

(43) Date of publication of application:
**09.06.82 Bulletin 82/23**

(45) Publication of the grant of the patent:
**14.08.85 Bulletin 85/33**

(84) Designated Contracting States:
**DE FR GB IT**

(56) References cited:
**EP-A-0 025 389**
**FR-A-1 251 565**
**FR-A-2 201 521**
**US-A-3 100 841**
**US-A-3 594 575**

**CONTROL & INSTRUMENTATION, vol. 5, no. 1,
January 1973, pages 26-28 A. SHAW: "Liquid
level measured seven different ways"
INSTRUMENTS AND CONTROL SYSTEMS, vol.
52, no. 1, January 1979, pages 47-51, J.
WILLIAMS: "Tips on nuclear gaging".**

(73) Proprietor: **INSTRUMENT AB SCANDITRONIX**
**Jakobsbergsgatan 17**
**S-103 91 Stockholm (SE)**

(72) Inventor: **Brahme, Anders**
**Thaliavägen 12**
**S-161 40 Bromma (SE)**
Inventor: **Mileikowsky, Curt**
**Mäsvägen 8 C**
**S-183 51 Täby (SE)**

(74) Representative: **Svanfeldt, Hans-Ake et al**
**DR. LUDWIG BRANN PATENTBYRA AB Box 1344**
**Drottninggatan 7**
**S-751 43 Uppsala (SE)**

Courier Press, Leamington Spa, England.

## Description

The present invention refers to a device for securing the presence of cooling medium at certain levels in a reactor tank. The device also permits detecting the density of the cooling medium in the reactor tank. The device according to the invention is preferably intended to be used in connection with near-accidents and in the case of reactor accidents to enable a rapid establishment of the presence of cooling medium at certain levels in the reactor tank. The density of the cooling medium at these levels is also established. With a knowledge of the measured values obtained suitable measures may thereupon be taken for correcting the fault, for example refilling cooling medium.

Devices for detecting the level of the cooling medium in a reactor tank are known and usually include a level tube which is in communicating connection with the upper and lower portions of the reactor tank. Floats arranged in the level tube operate micro switches, whereby an indication of the cooling medium level in the reactor tank is obtained.

Another prior device for detecting the level of the cooling medium includes a variant of the level tube described above but utilizes differential pressure measurement for indicating the level.

The prior devices shown several disadvantages, inter alia that the level tube is arranged on the outside of the reactor tank but within the reactor enclosure. If a near-accident or breakdown occurs so that hot water steam spurts into the reactor enclosure the level meter may become misleading or be destroyed. Another disadvantage is that in the case of a near-accident or in the case of reactor break-downs the level tube may be filled with steam whereby an erroneous indication of the level of the cooling medium is obtained.

It is important to be able to establish the level of the cooling medium in the reactor tank. If the level is too low additional cooling medium must be supplied via the emergency cooling system to avoid, for example, melt-down. On the other hand, inadmissibly large quantities of cooling medium must not be supplied since the pressure in the reactor tank then increases and other break-down risk then exist.

From FR—A—2 201 521 there is known a nuclear radiation detection device for detecting vapor in the coolant medium of a nuclear reactor. There is, however no detection of the level of the coolant.

From US—A—3 100 841 there is known a radiation detection device for locating the charge in a blast furnace. This device cannot be used in a nuclear reactor since the radiation from the radiation source of this known device would be completely masked by the radiation produced in the reactor itself.

The present invention aims at producing a device of the kind described by way of introduction, the reliability of measurement of the device not being allowed to be influenced mechanically, electrically etc. if steam flows into the reactor enclosure.

The features of the invention are seen from the attached claims 1 and 15. The main parts of the device consist of a radioactive source which emits high energy radiation right through the reactor tank and a detector means which detects the radiation from the radioactive source transmitted through the reactor tank. According to the invention, the radioactive source has to emit radiation which has a pulse structure, by which is meant that the number of particles or photons per unit of time varies. According to a preferred embodiment of the invention both the radioactive source and the detector means are located outside the reactor enclosure so that the radiation will penetrate also the latter, whereby the correct function of the radioactive source and the detector means is not influenced at all by steam which flows into the reactor enclosure. The radiation detected is compared with the radiation issuing from the radioactive source and may form a reference value which when the reactor is in normal operation is put equal to unity and may represent the density of the cooling medium at normal operation conditions. If a near-accident or break-down occurs so that the cooling medium sinks under the level of the beam or so that the proportion of steam in the cooling medium is altered the detected radiation is increased and this alteration can be shown in a simple way. The magnitude of the alteration in relation to the reference value is a measure of the reduced density or altered level of the cooling medium. The emergency cooling system is caused to pump cooling medium into the reactor tank until the measurement results show that the level or density, respectively, are within the desired values. According to another embodiment of the invention the high energy radiation is caused to pass through the reactor tank at different levels. It is thereby possible to obtain additional information regarding the level of the cooling medium by combining the measurement results obtained at the different levels with each other. The radiation at the different levels of the reactor tank may be produced either by using a separate accelerator at each level and a separate detector means at the corresponding level or by using only one accelerator at one level and deflection magnets for deflecting the beam to the remaining levels, it being understood that at each level there is a separate detector means.

A great number of measures are taken according to the invention for securing that the detector means will detect the radiation transmitted through the reactor tank but no other dispersed radiation, whether the latter comes from the reactor core, from other reactor components or from the radioactive source itself but along other directions than the straight line which connects the radioactive source with the detector means.

Since the surface of the cooling medium in the reactor tank is in a horizontal position it is natural to locate the radioactive source and the detector means in one and the same horizontal plane at the different levels where measurement is to be carried out. However, it is also within the scope of the basic idea of the invention to send the beams at an angle to the horizontal plane and to detect the radiation transmitted through the reactor tank along the said oblique direction.

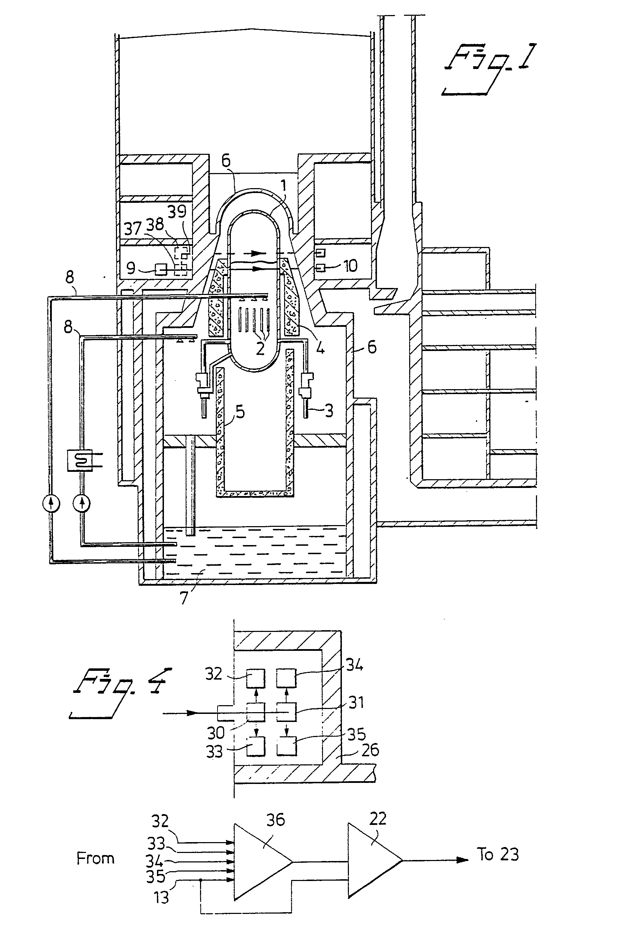

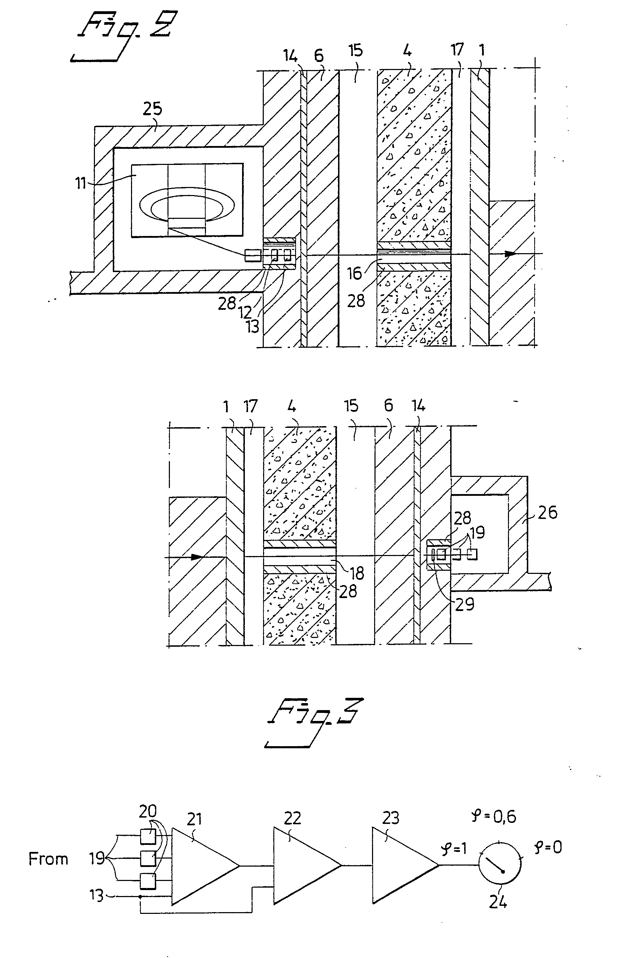

Some different embodiments of the invention will be described more in detail below in connection with the attached drawings, in which Figure 1 shows a cross-sectional view of a reactor building equipped with the device according to the present invention, Figure 2 shows a detailed cross-sectional view of the device according to the present invention installed in the reactor building in Figure 1, Figure 3 shows a block diagram of the electric circuit included in the device according to the invention, and Figure 4 shows a block diagram of an alternative embodiment of the electric circuit shown in Figure 3.

The heart of the reactor building shown in Figure 1 is a reactor tank 1 with fuel rods 2 and circulation conduits 3 for cooling medium. The reactor tank is surrounded by a concrete jacket 4, serving as a biological radiation protection. The lower portion of the reactor tank is situated over a conventional concrete container 5 for receiving a possible melt-down. By 6 is designated a reactor enclosure which has a condensation basin 7 for the cooling medium in its lower portion. An emergency cooling system 8 can pump cooling medium into the reactor tank 1 as well as into the reactor enclosure 6 in the case of near-accidents and reactor break-downs. In normal operation the reactor tank is filled with cooling medium to the level shown in Figure 1.

According to the invention a radioactive source 9 is arranged outside the reactor enclosure 6. The radioactive source sends a narrow, high energy beam right through the reactor enclosure 6, the biological protection 4 and the reactor tank 1. A detector means 10 placed outside the reactor enclosure 6 measures the radiation transmitted through the reactor tank. The detector means 10 is situated diametrically opposite the radioactive source 9 and the beam from the radioactive source passes through the reactor tank 1 at a level which is lower than the level of the cooling medium. If now the level of the cooling medium should sink below the path of the beam or, alternatively, the content of steam in the cooling medium should increase a drastic increase of the intensity of the radiation which reaches the detector means 10 takes place. The alteration of the signal from the detector means is utilized for indicating the level of the cooling medium as well as for indicating the density of the latter.

Figure 2 shows the device according to the invention in detail. In the construction here shown the radioactive source includes a so called race-track microtron 11 of a kind known per se which accelerates an electron beam up to a high energy. The electron beam taken out from a microtron strikes a target 12 of suitable material for forming so called brems radiation. The brems radiation passes a photon detector 13 which measures the photon flow. An additional detector not shown may possibly measure the electron flow to the target 12. The beam from the target 12 is very well confined and in turn penetrates the reactor enclosure 6, which moreover in a conventional way may have an embedded steel sheet 14, an air gap 15, a channel 16 in the biological protection 4, another air gap 17, one wall of the reactor tank 1, the cooling medium in the reactor tank, the opposite wall of the reactor tank 1, the air gap 17, a channel 18 which besides serves as a collimator, in the biological protection 4, the air gap 15 and finally the reactor enclosure 6 with its steel sheet 14 so as finally to strike the detector means 10 which includes a number of scintillation detectors 19 which are aligned with each other and with the target 12 in the radioactive source 9. Also radiation from the reactor core or components of the reactor and possibly even radiation which has been dispersed from the target 12 in directions others than the direction of the radiation shown (for example, such radiation may have been dispersed around the outside of the reactor enclosure) may strike the detector means. In every scintillation detector means which is shown in this example the particles or photons which interact with the scintillation crystals for example bismuth — germanate crystals, will give rise to a light flash which via a photomultiplier is converted into a voltage the magnitude of which is directly related to the energy of the detected radiation. The greater the energy, the greater the voltage will be. The signal from each crystal is passed via a separate discriminator circuit 20 to a separate input of a coincidence circuit 21 provided with several inputs as shown in Figure 3. Each discriminator is arranged so that it passes the electrical signal only if the voltage of the signal exceeds a threshold value which corresponds to a radiation energy which is higher than the energy of the radiation which is dispersed from the core or from other reactor components and which is desired not to influence the measurement result. The microtron 11 emits radiation in the form of short pulses. The pulse lengths are of the magnitude a few micro seconds. In order to reduce the influence of the background radiation on the measurement result to the greatest possible extent the photon detector 13 or the current signal from the said additional detector, not shown, in front of the target 12 is connected to an additional input of the coincidence circuit 21. The coincidence circuit 21 is open only during the duration of the pulse from the photon detector 13. The signals are counted during said period and pass to one input of a quotient circuit 22, while the other input of the ratio circuit receives the output signal from the photon detector 13. The quotient circuit forms the ratio of the signals at its two inputs and its output signal passes to the input of a logarithm-forming circuit 23 the output of which is connected to a display 24.

The radioactive source is surrounded by a radiation protection 25 which both forms a biological protection and damps the radiation of the radioactive source in all directions except the direction of radiation shown. A radiation protection 26 is arranged around the detector means 10 and is primarily intended to prevent dispersed undesirable radiation from striking the detector means 10.

In order to collimate the beam from the radioactive source 13 to the greatest possible extent recessed portions or channels are arranged where possible in the structure elements which are in the path of the beam. Said channels 16 and 18 are examples thereof. As will be seen from Figure 2 additional recesses may exist in the concrete walls of the reactor enclosure. However, it is important that the reactor enclosure is not weakened, and therefore it is advantageous if recesses need not be made therein. At the places where recesses or channels, respectively, occur it may, however, be desirable that they are confined by steel tubes, marked with the reference number 28, for improving the collimation of the beam.

As a complement to or substitution for the discriminator circuits 20 an energy screening 29 in the form of a plate of suitable material may be used. The function of the plate 29 is to pass only radiation the energy of which exceeds the energy of the dispersed radiation from the core or from other reactor components.

The fact that the detector means includes a number of detectors aligned with each other and with the radioactive source furthermore involves a possibility of controlling that only radiation which comes in the direction of the line which connects the radioactive source with the detector is detected, since a predeterminable relation between the signal in the detectors is to be present. Within the scope of the present invention the detector means may consist of a single detector device. instead of the detector means shown in Figure 3, a pair production detector device shown in Figure 4 may be used. This device includes two pair production detectors each consisting of a mass 30 and 31, respectively, of a material with a high atomic number, for example lead, lying in the path of the beam. Thus, the masses 30 and 31 are aligned with each other and with the radioactive source. When the radiation strikes the masses pair production takes place which is detected by means of crystals 32, 33 and 34, 35, respectively, known per se. It should be noted that the crystals 32 to 35 are not in the path of the beam which is an advantage of this detector means. The signals from the crystals pass to a coincidence circuit 36. The output signal from the photon detector 13 is supplied to an additional input of the coincidence circuit 36, whereby the influence of the background radiation of the measurement result is reduced. The output signal from the coincidence circuit 36 passes to the ratio circuit 22 which is activated by the output signal from the photon detector 13. The output of the ratio circuit 22 is connected to the input of the logarithm-forming circuit 23 after which the detector is built in the same way as according to Figure 3.

Instead of producing the brems radiation by means of a race-track microton 11, an ordinary microtron, a linear accelerator, a betatron, or some other electron accelerator may be used. Practical considerations may determine what energy the radiation is to have. In the case of too low energy the absorption will be too great and it will be difficult to discriminate the radiation from the background radiation from the reactor etc., and in the case of too high radiation energies the absorption will be too high owing to pair production. Thus, there exists an energy range which is the most favourable one. It is also preferred that the radioactive source emits brems radiation which has higher intensity in one direction than in any other direction.

Instead of using brems radiation it is possible to demonstrate the level and density of the cooling medium by using neutron radiation, the radioactive source 9 then preferably including a cyclotron. The detector means in such a case consists of neutron detector means, of a suitable type. Also in this case it is preferred that the radioactive source emits neutron radiation which has higher intensity in one direction than in any other direction.

Instead of demonstrating the level of the cooling medium at only one level as described above the reactor tank may, according to the invention, be passed by beams at various levels, either deflection magnets 37, 38 or additional accelerators being used for deflecting the beam or locating it as one or more other levels than that shown, respectively. The deflection magnets deflect the primary radiation of the accelerator which at the said additional level strikes the target 39 for producing the desired kind of beam.

The device according to the invention is to be in a initial setting at normal reactor operation. If a near-accident or a reactor break-down occurs the device according to the present invention it started automatically or manually and within about $\frac{1}{2}$ minute reliable detection may be obtained.

**Claims**

1. A device for detecting the presence of a cooling medium at one level and for detecting the density of the cooling medium in a reactor tank (1), characterized in a radioactive source (9, 11, 12, 39) disposed outside the reactor tank, the radiation thereof being in form of pulses and being directed right through the reactor tank, a detector means (10, 19, 30—35) positioned at the opposite side of the reactor tank and outside the same for detecting the radiation from the radioactive source transmitted through the reactor tank, and a comparison circuit (22) for comparing the radiation detected by the detector means with the radiation emitted by the radioactive source, the energy of the radiation from the radioactive source exceeding the energy of the radiation emitted from the reactor core (2) and other parts of the reactor plant.

2. A device according to claim 1, the reactor tank (1) being surrounded by a pressure-tight reactor enclosure (6), characterized in the fact that the radioactive source (9, 11, 12, 39) and the detector means (10, 19, 30—35) are located outside the reactor enclosure and that the radiation of the radioactive source is directed through the reactor enclosure by means of channels (16, 18).

3. A device according to either of claims 1 or 2, characterized in the fact that the radioactive source (9, 39, 11, 12) emits brems radiation which has higher intensity in one direction than in any other direction.

4. A device according to either of claims 1 or 2, characterized in the fact that the radioactive source (9, 39, 11, 12) emits neutron radiation which has higher intensity in one direction than in any other direction.

5. A device according to claim 3, characterized in the fact that the radioactive source (9, 39, 11, 12) includes a racetrack microtron (11) accelerator.

6. A device according to claim 4, characterized in the fact that the radioactive source (9, 39, 11, 12) includes a cyclotron accelerator.

7. A device according to any of claims 1 to 6, characterized in the fact that the detector means (10, 19, 30—35) includes a number of detectors (19) aligned with each other and with the radioactive source.

8. A device according to claim 7, characterized in the fact that the detectors are scintillation detectors (19), for example bismuth-germanate crystals, connected to a common coincidence circuit (21).

9. A device according to claim 8, characterized in a discriminator circuit (20) connected between each scintillation detector (19) and the coincidence circuit (21).

10. A device according to claim 8 or 9, characterized in an energy screening (29) for passing only such radiation to the detectors that has an energy which is greater than the energy of radiation from the core (2) of the reactor or from other reactor components.

11. A device according to claim 7, characterized in the fact that the detectors are pair production detectors each including a mass (30, 31) of a material with a high atomic number and a number of crystals (30, 32, 34, 35) arranged around the mass and connected to a common coincidence circuit (36).

12. A device according to any of claims 8 to 11, characterized in the fact that the coincidence circuit (21, 36) has an additional input connected to a device (13) for measuring the radiation of the radioactive source, so that the coincidence circuit opens for the duration of the radiation pulses.

13. A device according to claim 12, characterized in the fact that the comparison circuit (22) is a quotient circuit having two inputs, one connected to the output of the coincidence circuit (21, 36) and the other to said device (13) for measuring the radiation of the radioactive source.

14. A device according to any of the preceding claims in connection with claim 2, characterized in a collimator devices (16, 18, 28) including the channels (16, 18) and a radiation protection (28) around said channels preventing dispersed radiation from reaching the detector means (10, 19, 30—35).

15. A system comprising a plurality of devices according to any of the preceding claims, wherein each radioactive source is arranged at a different level along the height of the reactor tank and each corresponding detector means is also arranged at a different level along the height of the reactor tank.

16. A system according to claim 15 when not appended to claims 5, 6, wherein the radioactive sources (9, 37—39, 11, 12) comprise one racetrack microtron accelerator or one cyclotron accelerator and a plurality of deflection magnets for generating the radioactive radiations at the different levels along the height of the reactor tank.

**Patentansprüche**

1. Vorrichtung zum Ermitteln der Anwesenheit eines Kühlmediums bei einem bestimmten Pegel und zur Bestimmung der Dichte des Kühlmediums in einem Reaktorbehälter (1), gekennzeichnet durch eine radioaktive Quelle (9, 11, 12, 39) an der Außenseite des Reaktorbehälters, deren Strahlung in Form von Impulsen genau durch den Reaktorbehälter gerichtet ist, durch Detektoreinrichtungen (10, 19, 30—35) auf der gegenüberliegenden Seite außen auf dem Reaktorbehälter zum Aufnehmen der von der radioaktiven Quelle durch den Reaktorbehälter angegebenen Strahlung und durch eine Vergleichsschaltung (22) zum Vergleich der von den Detektoreinrichtungen aufgenommenen Strahlung mit der von der radioaktiven Quelle angegebenen Strahlung, wobei die Energie der von der radioaktiven Quelle abgegebenen Strahlung die Energie der vom Reaktorkern (2) und anderen Teilen der Reaktoranlage abgegebenen Strahlung übersteigt.

2. Vorrichtung nach Anspruch 1 bei welchem der Reaktorbehälter (1) von einer druckdichten Reaktorhülle (6) umgeben ist, dadurch gekennzeichnet, daß die radioaktive Quelle (9, 11, 12, 39) und die Detektoreinrichtungen (10, 19, 30—35) auf der Außenseite der Reaktorhülle angeordnet sind und die Strahlung der radioaktiven Quelle mittels Kanälen (16, 18) durch die Reaktorhülle geleitet ist.

3. Vorrichtung nach Anspruch 1 oder 2, dadurch gekennzeichnet, daß die radioaktive Quelle (9, 39, 11, 12) eine Bremsstrahlung abgibt, deren Intensität in einer Richtung höher ist als in den anderen Richtungen.

4. Vorrichtung nach Anspruch 1 oder 2, dadurch gekennzeichnet, daß die radioaktive Quelle (9, 39, 11, 12) eine Neutronenstrahlung abgibt, deren Intensität in einer Richtung höher ist als in den anderen Richtungen.

5. Vorrichtung nach Anspruch 3, dadurch gekennzeichnet, daß die radioaktive Quelle (9, 39, 11, 12) einen Race-Track Mikrotron Beschleuniger (11) aufweist.

6. Vorrichtung nach Anspruch 4, dadurch gekennzeichnet, daß die radioaktive Quelle (9, 39, 11, 12) einen Zyklotron Beschleuniger aufweist.

7. Vorrichtung nach einem der Ansprüche 1—6, dadurch gekennzeichnet, daß die Detektoreinrichtungen (10, 19, 30—35) eine Anzahl Detektoren (19) aufweist, die zueinander und zur radioaktiven Quelle ausgefluchtet sind.

8. Vorrichtung nach Anspruch 7, dadurch gekennzeichnet, daß die Detektoren Szintilationsdetektoren (19) sind, z.B. Wismut-Germaniumkristalle in Verbindung mit einer üblichen Koinzidenzschaltung (21).

9. Vorrichtung nach Anspruch 8, gekennzeichnet durch eine Diskriminatorschaltung (20) zwischen jedem Szintilationsdetektor (19) und der Koinzidenzschaltung (21).

10. Vorrichtung nach Anspruch 8 oder 9, gekennzeichnet durch eine Energieschirmung (29), die nur solche Strahlung zu den Detektoren durchläßt, deren Energie größer ist als die Energie der vom Kern (2) des Reaktors oder von anderen Reaktorteilen abgegebenen Strahlung.

11. Vorrichtung nach Anspruch 7, dadurch gekennzeichnet, daß die Detektoren paarerzeugende Detektoren sind, die jeweils eine Masse (30, 31) eines Materials mit einer hohen Atomzahl und einer Anzahl um die Masse herum angeordnete Kristalle (30, 32, 34, 35), die mit einer gemeinsamen Koinzidenzschaltung (36) verbunden sind, aufweist.

12. Vorrichtung nach einem der Ansprüche 8—11, dadurch gekennzeichnet, daß die Koinzidenzschaltung (21, 36) einen zusätzlichen Eingang aufweist, welcher mit einer Vorrichtung (13) zum Messen der Strahlung der radioaktiven Quelle derart versehen ist, daß die Koinzidenzschaltung für die Dauer des Strahlungsimpulses geöffnet ist.

13. Vorrichtung nach Anspruch 12, dadurch gekennzeichnet, daß die Vergleichsschaltung (22) eine Quotientenschaltung mit zwei Eingängen ist, von denen der eine mit dem Ausgang der Koinzidenzschaltung (21, 36) und der andere mit der Vorrichtung (13) zum Messen der Strahlung der radioaktiven Quelle verbunden ist.

14. Vorrichtung nach einem der vorangehenden Ansprüche in Verbindung mit Anspruch 2, gekennzeichnet durch eine Kollimatoreinrichtung (16, 18, 28) mit Kanälen (16, 18) und einem Strahlenschutz (28) um die Kanäle, welche verhindert, daß Streustrahlung die Dektektoreinrichtung (10, 19, 30—35) trifft.

15. Ein System bestehend aus einer Vielzahl von Vorrichtungen gemäß den vorangehenden Ansprüchen bei welchem jede radioaktive Quelle in einer unterschiedlichen Höhe über die Höhe des Reaktorbehälters verteilt angeordnet ist, wobei die zugehörigen Detektoreinrichtungen ebenfalls in unterschiedlichen Höhen über die Höhe des Reaktorbehälters verteilt angeordnet sind.

16. Ein System nach Anspruch 15, wenn dieser nicht von den Ansprüchen 5 und 6, abhängt, bei welchem die radioaktiven Quellen (9, 37—39, 11, 12) einen Race-Track Mikrotron Beschleuniger oder einen Zyklotron Beschleuniger und eine Vielzahl von Ablenkmagneten zum Erzeugen der radioaktiven Strahlung in unterschiedlichen Höhen über die Höhe des Reaktorbehälters verteilt angeordnet sind.

**Revendications**

1. Dispositif pour détecter la présence d'un fluide de refroidissement à un certain niveau et pour détecter la densité du fluide de refroidissement dans une cuve de réacteur (1), caractérisé en ce qu'il comprend une source radioactive (9, 11, 12, 39), placée à l'extérieur de la cuve de réacteur et dont le rayonnement est sous forme d'impulsions et est dirigé directement à travers la cuve de réacteur, des moyens de détection (10, 19, 30—35) placés du côté opposé de la cuve de réacteur et à l'extérieur de celle-ci pour détecter le rayonnement venant de la source radioactive et transmis à travers la cuve de réacteur, et un circuit de comparaison (22) pour comparer le rayonnement détecté par les moyens de détection avec le rayonnement émis par la source radioactive, l'énergie du rayonnement venant de la source radioactive dépassant l'énergie du rayonnement émis par le coeur de réacteur (2) et les autres parties de l'installation de réacteur.

2. Dispositif suivant la revendication 1, la cuve de réacteur (1) étant entourée par une enceinte de réacteur (6) étanche à la pression, caractérisé en ce que la source radioactive (9, 11, 12, 39) et les moyens de détection (10, 19, 30—35) sont placés à l'extérieur de l'enceinte de réacteur et en ce que le rayonnement de la source radioactive est dirigé à travers l'enceinte de réacteur au moyen de canaux (16, 18).

3. Dispositif suivant l'une ou l'autre des revendications 1 et 2, caractérisé en ce que la source radioactive (9, 39, 11, 12) émet un rayonnement de freinage qui possède une intensité plus grande dans une certaine direction que dans toute autre direction.

4. Dispositif suivant l'une ou l'autre des revendications 1 et 2, caractérisé en ce que la source radioactive (9, 39, 11, 12) émet un rayonnement de neutrons qui possède une intensité plus grande dans une certaine direction que dans toute autre direction.

5. Dispositif suivant la revendication 3, caractérisé en ce que la source radioactive (9, 39, 11, 12) comprend un accélérateur du type microtron (11) à piste de lancement.

6. Dispositif suivant la revendication 4, caractérisé en ce que la source radioactive (9, 39, 11, 12) comprend un accélérateur du type cyclotron.

7. Dispositif suivant l'une quelconque des revendications (1 à 6) caractérisé en ce que les moyens de détection (10, 19, 30, 35) comprennent une pluralité de détecteurs (19) alignés les uns avec les autres et avec la source radioactive.

8. Dispositif suivant la revendication 7, caractérisè en ce que les détecteurs sont des détecteurs à scintillation (19), par exemple de cristaux du type bismuth-germanate, raccordés à un circuit de coïncidence commun (21).

9. Dispositif suivant la revendication 8, caractérisé en ce qu'un circuit de discrimination (20) est branché entre chaque détecteur à scintillation (19) et le circuit de coïncidence (21).

10. Dispositif suivant la revendication 8 ou 9, caractérisé en ce qu'il comporte un filtre d'énergie (29) pour laisser passer seulement vers les détecteurs le rayonnement qui possède une ènergie supérieure à l'énergie du rayonnement venant du coeur (2) du réacteur ou d'autres composants du réacteur.

11. Dispositif suivant la revendication 7, caractérisé en ce que les détecteurs sont des détecteurs de prodution de paires comprenant chacun une masse (30, 31) d'une matière à haut nombre atomique et une pluralité de cristaux (30, 32, 34, 35) disposés autour de la masse et raccordés à un circuit de coïncidence commun (36).

12. Dispositif suivant l'une quelconque des revendications 8 à 11, caractérisé en ce que le circuit de coïncidence (21, 36) comporte une entrée supplémentaire reliée à un dispositif (13) de mesure du rayonnement de la source radioactive, de sorte que le circuit de coïncidence s'ouvre pendant la durée des impulsions de rayonnement.

13. Dispositif suivant la revendication 12, caractérisé en ce que le circuit de comparaison (22) est un circuit de quotient comportant deux entrées dont l'une est reliée à la sortie du circuit de coïncidence (21, 36) et l'autre au dit dispositif (13) de mesure du rayonnement de la source radioactive.

14. Dispositif suivant l'une quelconque des revendications précédentes en relation avec la revendication 2, caractérisé en ce qu'il comprend un dispositif de collimation (16, 18, 28) comportant les canaux (16, 18) et une protection antiradiation (28) autour des dits canaux pour empêcher le rayonnement dispersé d'atteindre les moyens de détection (10, 19, 30—35).

15. Système comprenant une pluralité de dispositifs suivant l'une quelconque des revendications précédentes, dans lequel chaque source radioactive est placée à un niveau différent sur la hauteur de la cuve de réacteur et chaque détecteur correspondant est également placé à un niveau différent sur la hauteur de la cuve de réacteur.

16. Système suivant la revendication 15 lorsqu'elle ne dépend pas des revendications 5, 6, dans lequel les sources radioactives (9, 37—39, 11, 12) comprennent un accélérateur du type microtron à piste de lancement ou un accélérateur du type cyclotron et une pluralité d'aimants de déviation, de manière à engendrer les rayonnements radioactifs aux différents niveaux le long de la hauteur de la cuve de réacteur.

0 053 597

Fig. 1

Fig. 4

From
32
33
34
35
13

36

22

To 23

1

Fig. 2

Fig. 3